# EUROPEAN PATENT SPECIFICATION

(11) **EP 2 802 399 B1**
(45) Date of publication and mention of the grant of the patent: **04.03.2020**
(21) Application number: 12863349.2
(22) Date of filing: 20.12.2012
(51) Int. Cl.: B01D 35/30, B01D 35/00, B01D 25/02

(54) **WATER PURIFYING FILTER ASSEMBLY MODULE AND WATER PURIFIER HAVING THE SAME**
MONTAGEMODUL FÜR WASSERREINIGUNGSFILTER UND WASSERREINIGER DAMIT
MODULE ENSEMBLE DE FILTRES DE PURIFICATION D'EAU ET PURIFICATEUR D'EAU DOTÉ DE CELUI-CI

(30) Priority: 28.12.2011 KR 20110144646; 30.10.2012 KR 20120121256
(43) Date of publication of application: 19.11.2014
(73) Proprietor: Coway Co., Ltd., Gongju-si, Chungcheongnam-do 314-895 (KR)
(72) Inventor: NOH, Jin-Hwan, Seoul 151-851 (KR); MOON, Hyun-Seok, Seoul 151-851 (KR); PARK, Si-Jun, Seoul 151-851 (KR); KIM, Jae-Man, Seoul 151-851 (KR); KA, Jin-Seong, Seoul 151-851 (KR); LEE, Young-Jae, Seoul 151-851 (KR); MO, Byung-Sun, Seoul 151-851 (KR); KIM, Dae-Hwan, Seoul 151-851 (KR)
(74) Representative: Nederlandsch Octrooibureau
(86) International application number: PCT/KR2012/011123
(87) International publication number: WO 2013/100478

(56) References cited:
- EP-A1- 2 206 543
- WO-A1-2008/035830
- JP-U- H04 102 694
- KR-A- 20090 005 574
- KR-A- 20100 050 335
- KR-A- 20100 051 447
- KR-B1- 100 804 302
- KR-B1- 100 873 294
- US-A1- 2005 178 708
- US-A1- 2008 047 900
- US-B2- 7 718 060

## Description

### [Technical Field]

The present invention relates to a water purifying filter assembly module in which one or more water purifying filters are connected or separated, and in the case that the water purifying filters are connected, raw water is introduced to the water purifying filters and purified water filtered by the water purifying filters flows out therefrom, and a water purifier having the same, and more particularly, to a water purifying filter assembly module in which when a filtering unit in which one or more water purifying filters are connected to a head unit is installed in and connected to a case unit, raw water is introduced to the filtering unit without a pipe connection operation, and purified water filtered by the filtering unit flows out therefrom, and a water purifier having the same.

### [Background Art]

A water purifying filter assembly module is a device installed in a water purifier, or the like, in which one or more water purifying filters are connected, raw water is introduced to the water purifying filters, and purified water filtered by the water purifying filters flows to the outside, e.g., to a purified water tank storing purified water.

A related art water purifying filter assembly module is provided in a water purifier, or the like, and includes a head unit having one or more water purifying filters connected thereto or separated therefrom, supplies raw water to the connected water purifying filters, and allows purified water filtered by the water purifying filters to flow out therefrom to the outside.

In the related art water purifying filter assembly module, since the head unit, to and from which the water purifying filters are connected or separated, is disposed in the water purifier, or the like, a certain amount of space is required for the water purifying filters to be connected or separated.

Thus, when the water purifier, or the like, is positioned in a narrow space, it is not easy for the water purifying filters to be connected to or separated from the head unit, making it difficult to replace the water purifying filters.

Further, when the water purifying filters are replaced, water may be leaked from the head unit or the water purifying filter, and in this case, since water is leaked to the water purifier equipped with the head unit, or the like, electronic equipment may suffer a failure, or the water purifier may be contaminated.

Also, in the case of connecting two or more water purifying filters to the related art water purifying filter assembly module, the two or more water purifying filters cannot be connected in series. Namely, in the case of connecting two or more water purifying filters to the related art water purifying filter assembly module, two or more water purifying filters are connected to the water purifying filter assembly module in parallel.

Thus, water may be simultaneously introduced to the two or more water purifying filters, and water filtered by the two or more water purifying filters simultaneously flows out therefrom. Thus, two or more different types of water purifying filter cannot be connected to the water purifying filter assembly module, and since only the same type of water purifying filter can be used, water filtering efficiency based on water purifying filters may be degraded.

In addition, since only the same type of two or more water purifying filters are connected to the water purifying filter assembly module, the two or more water purifying filters should be replaced together. Namely, if only some of the same type of water filters, among two or more water purifying filters, are replaced, water filtration efficiency is degraded by the unreplaced water purifying filter.

WO 2008/035830 A1 describes a filter cartridge and a filter head including: a filter housing having an inlet port through which unfiltered water is introduced, an outlet port through which water filtered by a filtering member is drained, and a filtering member; a cap member engaged with the filter housing, forming a chamber region where unfiltered water is temporarily stored, and having an inlet formed in an outer direction through which unfiltered water is introduced and a sleeve formed in an inner direction at a center portion; and a check valve disposed in the chamber region, and which blocks water flow from the inlet toward the filter housing before the filter housing is engaged and allows water flow toward the filter housing when the filter housing is engaged. The filter housing is engaged with the cap member by rotating the filter housing.

US 2005/178708 A1 describes an automatic water filtration and purification system to allow a continuous water flow to downstream fixtures while simultaneously and automatically regularly flushing and cleaning in-path filter media. The automatic water filtration and purification system has at least one filter to remove impurities from a water in-path through-put. A cleaner is coupled to the at least one filter to clean the at least one filter. A controller is coupled to the at least one filter to regulate automatic operation of the cleaner wherein continuous operation of water flow to fixtures downstream of the at least one filter is essentially uninterrupted during the operation of the cleaner and the controller.

KR 2009 0005574 A describes a filter assembly for a water supply device to simply replace the filter without dismantling pipes connected to the filter assembly when performing a filter replacement operation. A filter assembly for a water supply device comprises: a filter member including a cylindrical filter filtering raw water, and a front holder and a rear holder installed on both sides of the cylindrical filter; a filter case including a body having an opening formed in one side thereof to house the filter member in the opening, a cap opening or closing the opening of the body, tubular inlet and outlet projected to the outside from the body, a protrusion part formed to a predetermined size on a side end of the body, and a handle formed on a top part of the body; a filter case housing into which the inlet and outlet of the filter case are inserted, which has tubular inflow part and outflow part formed on the outer side thereof such that a supply pipe and a water supply pipe are connected to the inflow part and outflow part, and which has a hook part formed on an inner side thereof such that the hook part is engaged with the protrusion part; and a filter case housing cover opening or closing an opened top part of the filter case housing.

KR 2010 0051447 A describes a clean water filter assembly comprising the following: an assembly head comprised of a water inlet, a water exit and a connector; a water purification filter housing which is connected or detached to the connector; a purified water inlet part; a UV lamp ultraviolet-sterilizing water which is filtered and flowed; a purified water outlet part discharging water sterilized by ultraviolet ray; a UV filter mounted to the assembly head. The UV filter includes the following: a constant-rate valve connected to a purified water inlet part; a constant-rate flow feed part in which a constant-rate flow outlet part is connected to a constant-rate valve; a constant-rate flow inlet part connected to the constant-rate flow outlet part; and a UV filter housing with the UV lamp, a purified water outlet. The constant-rate flow feed part includes a flow sensor.

EP 2 206 543 A1 describes a water purifying system having a bypass path supplying raw water to an outlet when a filter assembly is separated from a valve assembly. The water purifying system includes a valve assembly having a valve cover with an inlet and an outlet, and a head member moved up and down within the valve cover to form an inflow path and an outflow path, and a filter assembly removably connected to the valve assembly and mounted with a filter. When the filter assembly is connected to the valve assembly through a linear motion, the filter assembly advances the head member so that a fluid flown in through the inlet is guided to the outlet passing through the filter. When the filter assembly is separated from the valve assembly, the head member is retreated so that the fluid flown through the inlet is guided to the outlet bypassing the filter.

KR 2010 0050335 A describes a water purifying filter assembly including the following: a filter housing with a connection part and a falling prevention member and is built inside the water purifying filter; an inlet and an outlet connected to the water purifying filter; and an assembly head with a separation part separating the filter housing. A falling prevention protrusion is equipped to the separation part. A rotation restricting part is formed on the falling prevention member.

US 2008/047900 A1 describes a filter, comprising: a housing defining an inner cavity; an inner sleeve disposed within the housing, the inner sleeve having portions in a spaced relationship with respect to the an interior surface of the inner cavity; a plurality of tab members extending away from the inner sleeve, the tab members being configured to be removably secured to a feature of a cap, the cap being configured to engage the housing to provide a first position and a second position with respect to the housing, wherein the first position seals the inner sleeve to the housing and a fluid filtration path from an inlet of the filter to an outlet of the filter is defined by the inner sleeve and the second position provides a fluid drain path through an opening in the cap, the fluid drain path being closed when the cap is in the first position; and a filtration media disposed within an interior area of the inner sleeve, wherein the filtration media is disposed in the fluid filtration path and fluid flow through the outlet opening must pass through the filtration media.

JP H04 102694 U describes a water purification apparatus having a body part provided with a raw water supply part and a drain part and a plurality of water purification cartridges mounted on the body part, and these water purification cartridges are provided in the body part. The water purifier is detachably mounted on a plurality of parts to be mounted and is provided with identification means for preventing erroneous attachment of each of the water purification cartridges to the mounted parts.

### [Disclosure]

### [Technical Problem]

The present invention has been devised through recognition of any one of the issues or problems evident in the related art.

An aspect of the present invention provides a water purifying filter assembly module in which when a filtering unit in which one or more water purifying filters are connected to a head unit is installed in and connected to a case unit, raw water is introduced to the filtering unit without a pipe connection operation, and purified water filtered by the filtering unit flows out therefrom, and a water purifier having the same.

An aspect of the present invention also provides a water purifying filter assembly module in which a filtering unit in which water purifying filters are connected to a head unit is connected to a case unit or separated therefrom such that it is easily installed therein.

An aspect of the present invention also provides a water purifying filter assembly module in which a water purifying filter may be replaced, even in a narrow space.

An aspect of the present invention also provides a water purifying filter assembly module in which when a filtering unit in which water purifying filters are connected to a head unit is separated from a case unit, raw water is prevented from flowing into the water purifying filters.

An aspect of the present invention also provides a water purifying filter assembly module in which when a filter unit including water purifying filters connected to a head unit is separated, water is allowed to be leaked to a case unit to thus prevent contamination or an incident due to leaking water.

### [Technical Solution]

A water purifying filter assembly module and a water purifier having the same in relation to an embodiment for realizing at least one of the tasks may have the following features.

The present invention is largely based on a technique in which when a filtering unit in which one or more water purifying filters are connected to a head unit is connected to a case unit so as to be installed therein, raw water is introduced to the filtering unit without a pipe connection operation, and purified water filtered by the filtering unit flows out therefrom.

According to an aspect of the present invention, there is provided a water purifying filter assembly module including: a head unit, to or from which one or more water purifying filters are connected or separated, allowing raw water to flow into the water purifying filters and purified water filtered by the water purifying filters to flow out therefrom, when the water purifying filters are connected to the head unit; and a case unit, to or from which a filtering unit in which the water purifying filters are connected to the head unit is connected or separated so as to be installed therein, allowing raw water to flow into the head unit and purified water from the head unit to flow out therefrom, when the filtering unit is connected to the case unit.

In this case, when the filtering unit is separated from the case unit, the filtering unit may be lifted upwardly from the case unit.

Also, the head unit includes: a head unit main body; a filter connection part disposed in the head unit main body to allow raw water to flow into the water purifying filters and purified water filtered by the water purifying filters to flow out therefrom, when the water purifying filters are connected; and a detaching part disposed in the head unit main body to facilitate a connection to or separation from the case unit.

One detaching part may be disposed on either side of the head unit main body.

Also, the detaching part may include a detaching member elastically supported by the head unit main body in order to connect the filtering unit to the case unit or separate the filtering unit therefrom.

The detaching part may include: an elastic member inserted into an insertion projection formed on a head unit main body; and a detaching member elastically supported by the elastic member and configured to be caught by the case unit when connected to the case unit and released from the case unit when separated from the case unit.

Also, a handle portion may be formed on one side of the detaching member such that the handle portion is inserted into and protruded from a handle hole formed in the head unit main body, and a stopping projection may be formed on the other side of the detaching member such that the stopping projection is inserted into and protruded from an insertion hole formed in the head unit main body and caught by a stopping hole formed in the case unit when connected to the case unit.

The head unit further includes: an inlet/outlet part disposed in the head unit main body and allowing raw water introduced to the case unit to flow into the filter connection part and purified water flowing out from the filter connection unit to flow out therefrom through the case unit, when connected to the case unit.

Also, the inlet/outlet part includes: a raw water inlet having one side disposed in the head unit main body so as to be connected to an inlet connection portion included in the filter connection part and the other side inserted into an inlet insertion part disposed in the case unit, when connected to the case unit; and a purified water outlet having one side disposed in the head unit main body so as to be connected to an outlet connection portion included in the filter connection part and the other side inserted into an outlet insertion part provided in the case unit, when connected to the case unit.

Also, the filter connection part includes: an inlet connection portion connected to an inlet disposed in the water purifying filter when the water purifying filter is connected; and an outlet connection portion connected to an outlet disposed in the water purifying filter when the water purifying filter is connected.

The case unit includes the inlet insertion part connected to a raw water source, the raw water inlet portion included in the head unit being inserted thereinto when the filtering unit is connected; and the outlet insertion part, into which the purified water outlet included in the head unit is inserted, when the filtering unit is connected.

Also, the inlet insertion part includes an opening and closing member opening a flow channel formed in the inlet insertion part when the raw water inlet is inserted therein and closing the flow channel when the raw water inlet is separated.

The opening and closing member may be elastically supported by an elastic member provided in the inlet insertion part.

Also, the stopping hole may be formed in an upper portion of the case unit to allow a stopping projection formed in the detaching member included in the head unit to be caught therein when the filtering unit is connected.

According to another aspect of the present invention, there is provided a water purifier including: a water purifier housing; and the foregoing water purifying filter assembly module installed in the water purifier housing, wherein the head unit included in the water purifying filter assembly module may be exposed from an upper surface of the water purifier housing or may be exposed to the outside when a top cover of the water purifier housing is separated.

### [Advantageous Effects]

According to an embodiment of the present invention, when the filtering unit in which one or more water purifying filters are connected to the head unit is connected to the case unit such that it is installed in the case unit, raw water can flow into the filtering unit without a pipe connection operation and purified water filtered by the water purifying filters can flow out therefrom.

Also, according to an embodiment of the present invention, the filtering unit in which water purifying filters are connected to a head unit can be connected to a case unit such that it is easily installed therein or separated therefrom.

Also, according to an embodiment of the present invention, since the filtering unit is completely lifted upwardly by separating it from the case unit and the water purifying filter is separated from the head unit, the water purifying filter can be replaced even in a narrow space.

Also, according to an embodiment of the present invention, when the filtering unit in which the water purifying filters are connected to the head unit is separated from the case unit, the elastically supported opening and closing member closes the opening and closing member to prevent raw water from flowing into the water purifying filters.

Also, according to an embodiment of the present invention, when the filtering unit in which the water purifying filters are connected to the head unit is separated from the case unit, although water is leaked, it is leaked to the case unit, thus preventing contamination of the interior of the water purifier or an electric incident, or the like, due to the dripping water.

Also, according to an embodiment of the present invention, two or more different types of water purifying filters may be connected in series.

Also, according to an embodiment of the present invention, two or more water purifying filters may not be replaced together.

Also, according to an embodiment of the present invention, water filtering efficiency by the water purifying filters can be enhanced.

Also, according to an embodiment of the present invention, two or more water purifying filters can be connected to appropriate filter connection parts, respectively, among two or more filter connection parts included in the head unit to allow the water purifying filters to be connected thereto.

### [Description of Drawings]

FIG. 1 is a perspective view of a water purifying filter assembly module according to an embodiment of the present invention.
FIG. 2 is a view illustrating water purifying filters of the water purifying filter assembly module according to an embodiment of the present invention.
FIG. 3 is an exploded perspective view of a head unit of the water purifying filter assembly module according to an embodiment of the present invention.
FIG. 4 is a perspective view of a case unit of the water purifying filter assembly module according to an embodiment of the present invention.
FIG. 5 is a cross-sectional view taken along line A-A in FIG. 1.
FIG. 6 is a cross-sectional view taken along line B-B in FIG. 1.
FIG. 7 is a cross-sectional view illustrating a state in which a filtering unit is separated from the case unit in the water purifying filter assembly module according to an embodiment of the present invention.
FIG. 8 is a cross-sectional view illustrating a state in which water purifying filters are separated from the head unit in the water purifying filter assembly module according to an embodiment of the present invention.
FIG. 9 is a perspective view of a water purifier according to an embodiment of the present invention.

### [Mode for Invention]

To help understand the foregoing features of the present invention, a water purifying filter assembly module and a water purifier having the same in relation to an embodiment of the present invention will be described in detail with reference to the accompanying drawings.

Hereinafter, embodiments most appropriate to help in an understanding of the technical features of the present invention will be described, the technical features of the present invention are not limited by the described embodiments and merely illustrate the implementation of the present invention through the embodiments described hereinafter. Thus, the present invention can be variably modified within the scope of the present invention through the embodiments described below, and such modifications are within the scope of the present invention. In order to help understand the embodiments described hereinafter, the like or similar reference numerals are used for relevant components among the components having the same function in the respective embodiments in the accompanying drawings.

Embodiments in relation to the present invention are based on a concept that when a filtering unit in which one or more water purifying filters are connected to a head unit is installed in and connected to a case unit, raw water is introduced to the filtering unit without a pipe connection operation, and purified water filtered by the filtering unit flows out therefrom.

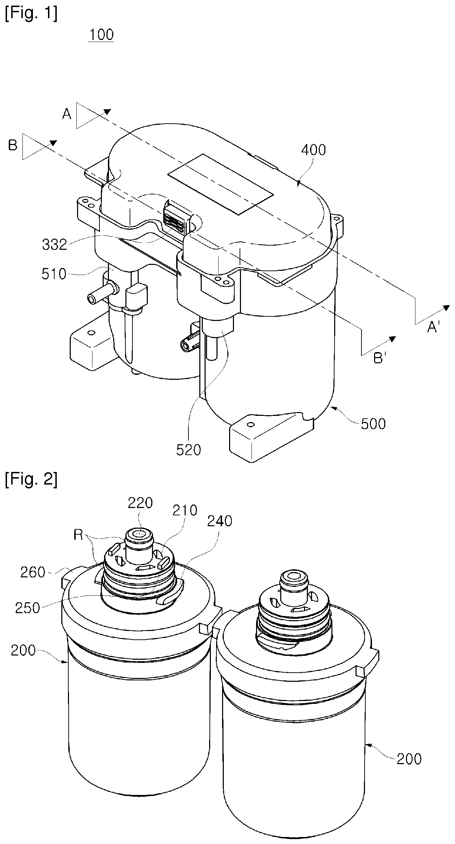

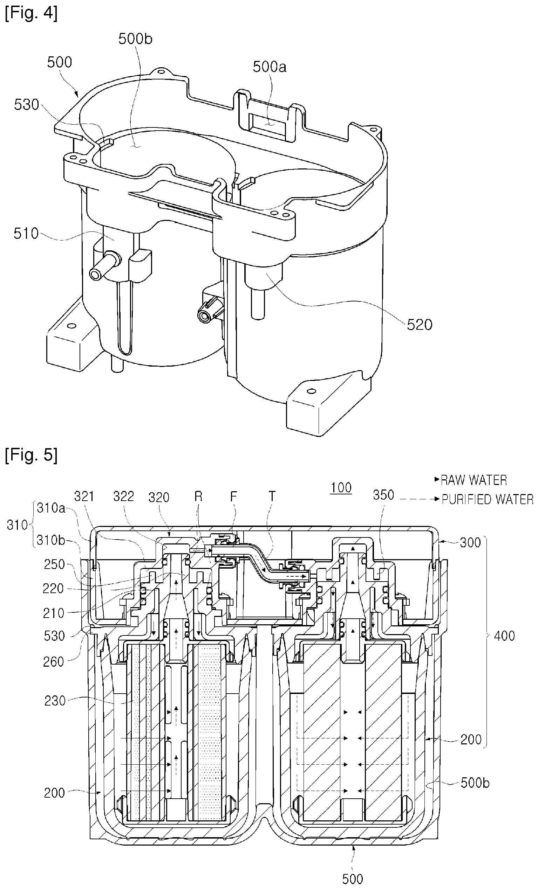

As shown in an embodiment illustrated in FIGS. 1 and 5, a water purifying filter assembly module 100 according to an embodiment of the present invention includes a head unit 300 to or from which one or more water purifying filters 200 are connected or separated and a case unit 500 to or from which a filtering unit 400 including the water purifying filters 200 connected to the head unit 300 is connected so as to be installed therein or separated.

As shown in the embodiment illustrated in FIGS. 2 and 5, the water purifying filter 200 has an inlet 210 through which raw water or purified water filtered by a different water purifying filter 200 flows. Also, as shown in the illustrated embodiment, the water purifying filter 200 may have a filtering member 230 filtering raw water introduced through the foregoing inlet 210 or purified water introduced after being filtered by the different water purifying filter 200. Also, the water purifying filter 200 may have an outlet 220 allowing filtered purified water to flow out therethrough.

Also, as shown in the embodiment illustrated in FIG. 2, the water purifying filter 200 may have a connection protuberance 240 formed thereon. The connection protuberance 240 of the water purifying filter 200 may be caught by a stopping projection (not shown) formed on a filter connection part 320 (to be described) included in the head unit 300 or released therefrom according to rotation of the water purifying filter 200.

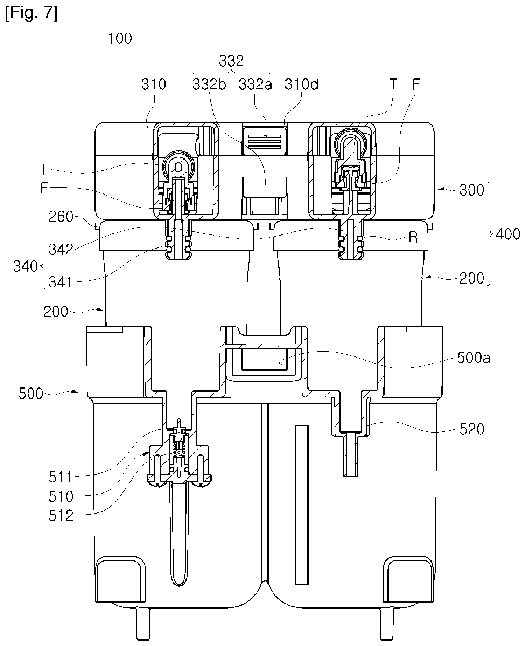

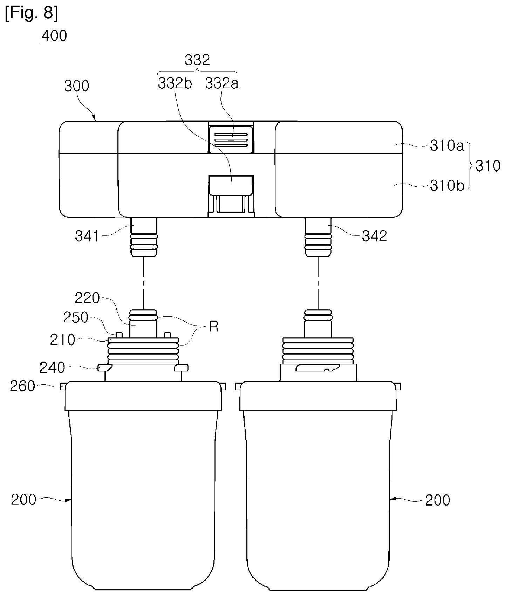

Through such a configuration, the water purifying filter 200 may be connected to the head unit 300, specifically, to the filter connection part 320 of the head unit 300 in the illustrated embodiment, through rotation, as illustrated in FIGS. 5 and 7, or may be separated therefrom as illustrated in FIG. 8.

In this case, as shown in the embodiment illustrated in FIG. 2, the water purifying filter 200 may have a rotation preventing projection 260. Also, as shown in the embodiment illustrated in FIG. 4, a rotation preventing recess 530 may be formed in a filter insertion part 500b formed to allow the water purifying filter 200 to be inserted into the case unit 500 (to be described).

Through such a configuration, as illustrated in FIG. 5, when the filtering unit 400 connected to the head unit 300 is inserted into the filter insertion part 500b so as to be installed in the case unit 500, the rotation preventing projection 260 of the water purifying filter 200 may be inserted into the rotation preventing recess 530 of the filter insertion part 500b of the case unit 500. Accordingly, the water purifying filter 200 inserted in the filter insertion part 500b may not be rotated. Thus, the water purifying filter 200 inserted in the filter insertion part is prevented, for example, from being rotated by pressure of water introduced into the water purifying filter 200 and separated from the filter connection part 320.

Also, as shown in the embodiment illustrated in FIG. 2, the water purifying filter 200 has an identification projection 250. Also, as shown in the illustrated embodiment, the identification projection 250 is not formed on the different water purifying filter 200.

In addition, as shown in the embodiment illustrated in FIG. 5, a different identification projection 350 is formed on the filter connection part (to be described) included in the head unit 300, to which the water purifying filter 200 with the identification projection 250 formed thereon is not to be connected. Also, the different identification projection 350 is not formed on a filter connection part 320 to which the water purifying filter 200 is to be connected.

Thus, the identification projection 250 formed on the water purifying filter 200 may be interfered with by the identification projection 350 formed on the filter connection part 320, and thus, the water purifying filter 200 is not connected to the filter connection part 320 to which the water purifying filter 200 should not be connected, and is only connected to the filter connection part 320 to which the water purifying filter 200 should be connected. Namely, two or more water purifying filters 200 are connected to appropriate filter connection parts 320, respectively, among the two or more filter connection parts 320 included in the head unit 300 to allow the water purifying filters 200 to be connected thereto.

As shown in the embodiment illustrated in FIGS. 5, 7, and 8, one or more water purifying filters 200 may be connected to the head unit 300 or separated therefrom. As shown in the illustrated the embodiment, two water purifying filters 200 may be connected to or separated from the head unit 300. However, the number of water purifying filters 200 connected to or separated from the head unit 300 is not limited thereto and any number of water purifying filters 200 may be connected to or separated from the head unit 300 as long as it is one or more.

Also, the head unit 300 is configured to allow raw water to be introduced to the water purifying filter 200 and purified water filtered by the water purifying filter 200 to flow out therefrom, when the water purifying filter 200 is connected to the head unit 300.

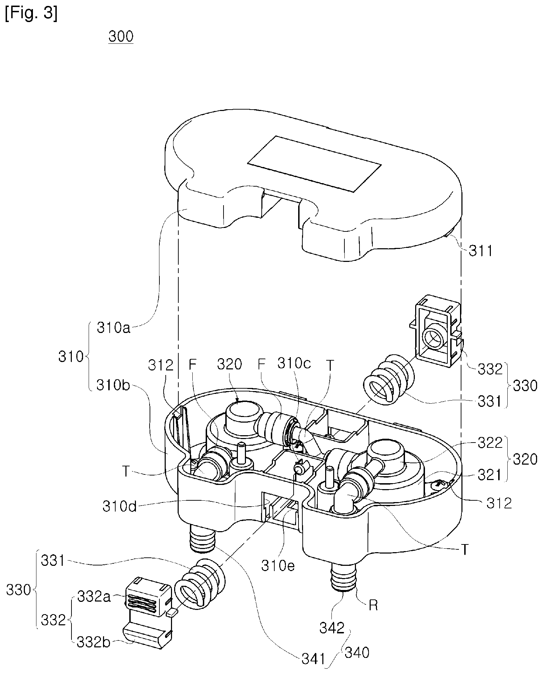

To this end, as shown in the embodiment illustrated in FIG. 3, the head unit 300 includes a head unit main body 310, the filter connection part 320, and a detaching part 330.

As shown in the embodiment illustrated in FIGS. 3 and 5, the head unit main body 310 may include a cover member 310a and a main body member 310b. The head unit main body 310 may be configured by connecting the cover member 310a to an opened upper portion of the main body member 310b. To this end, as shown in the embodiment illustrated in FIG. 3, the cover member 310a includes an insertion projection 311, and the main body member 310b may include an insertion recess 312. When the cover member 310a is connected to the opened upper portion of the main body member 310b, the foregoing insertion projection 311 may be inserted into the insertion recess 312.

However, the configuration in which the cover member 310a is connected to the opened upper portion of the main body member 310b to form the head unit main body 310 is not limited thereto, and any known configuration may be employed as long as the cover member 310a is connected to the opened upper portion of the main body member 310b to form the head unit main body 310.

As illustrated in FIGS. 3 and 5, the filter connection part 320 may be disposed in the head unit main body 310, i.e., specifically, in the main body member 310b of the head unit main body 310 in the illustrated embodiment, to allow raw water to be introduced to the water purifying filter 200 and purified water filtered by the water purifying filter 200 to flow out therefrom, when the water purifying filter 200 is connected thereto.

As illustrated, two filter connection parts 320 may be included in the head unit 300. Accordingly, two water purifying filters 200 may be connected to or separated from the head unit 300. However, the number of the filter connection parts 320 included in the head unit 300 is not limited thereto and one filter connection part or three or more filter connection parts may be included in the head unit 300. When one filter connection part 320 is included in the head unit 300, only one water purifying filter 200 may be connected to or separated from the head unit 300. When three or more filter connection parts 320 are included in the head unit 300, three or more water purifying filters 200 may be connected to or separated from the head unit 300.

As shown in the embodiment illustrated in FIGS. 3 and 5, the filter connection part 320 includes an inlet connection portion 321 and an outlet connection portion 322.

As shown in the embodiment illustrated in FIG. 5, the inlet connection portion 321 may be connected to the inlet 210 provided in the water purifying filter 200 when the water purifying filter 200 is connected. Thus, as illustrated in FIG. 5, raw water introduced to the inlet connection portion 321 may flow to the inlet 210 of the water purifying filter 200.

Also, as shown in the embodiment illustrated in FIG. 5, when the water purifying filter 200 is connected, the outlet connection portion 322 may be connected to the outlet 220 provided in the water purifying filter 200. Thus, as illustrated in FIG. 5, raw water introduced to the water purifying filter 200 through the inlet connection portion 321 and the inlet 210 of the water purifying filter 200 is filtered by the filtering member 230 provided in the water purifying filter 200, while passing therethrough, and subsequently flows out therefrom through the outlet 220 of the water purifying filter 200 and the outlet connection portion 322.

As shown in the embodiment illustrated in FIGS. 3 and 5, two filter connection parts 320 may be provided in the head unit main body 310, specifically, in the main body members 310b of the head unit main body 310. As shown in the illustrated embodiment, the two filter connection parts 320 may be connected by a connection pipe T. Namely, as shown in the illustrated embodiment, one side and the other side of the connection pipe T may be connected to the two filter connection parts 320 by a fitting member F, respectively.

Also, as shown in the embodiment illustrated in FIGS. 3 and 5, one side of the connection pipe T may be connected to the outlet connection portion 322 of the filter connection part 320, and the other side of the connection pipe T may be connected to the inlet connection portion 321 of the other filter connection part 320. Accordingly, as illustrated in FIG. 5, purified water filtered by one water purifying filter 200 may flow out therefrom from the outlet connection portion 322 of the one filter connection part 320 connected thereto, flows through the connection pipe T, and subsequently flows into the inlet connection portion 321 of the other filter connection part 320, thus being introduced to the other water purifying filter 200.

Through such a configuration, two or more types of water purifying filters 200 may be connected in series by connecting them to the head unit 300. Thus, in comparison to a case in which the same type of water purifying filters 200 are connected in parallel, water filtering efficiency by the water purifying filters 200 can be enhanced.

Because different types of water purifying filters 200 have different life spans, the water purifying filters 200 connected to the head unit 300 may not necessarily be replaced together.

Meanwhile, as shown in the embodiment illustrated in FIGS. 2 and 5, one or more sealing members R may be disposed in the inlet 210 and the outlet 220 of the water purifying filter 200. Accordingly, as described above and as illustrated in FIG. 5, since the inlet 210 and the outlet 220 are connected to the inlet connection portion 321 and the outlet connection portion 322 of the filter connection part 320, respectively, when raw water or purified water flows, it is not leaked to the outside.

The detaching part 330 may be disposed in the head unit main body 310, i.e., in the main body member 310b of the head unit main body 310 in the embodiment illustrated in FIG. 3. By virtue of the detaching part 330, the filtering unit 400 in which the water purifying filter 200 is connected to the head unit 300 may be easily connected to the case unit 500 as illustrated in FIG. 5 or may be easily separated from the case unit 500 as illustrated in FIG. 7.

As shown in the embodiment illustrated in FIG. 3, two detaching parts 330 may be provided in both sides of the head unit main body 310, i.e., in both sides of the main body member 310b of the head unit main body 310 in the illustrated embodiment. However, the number of the detaching parts 330 is not limited thereto and any number of detaching parts may be provided as long as the filtering unit 400 in which the water purifying filter 200 is connected to the head unit 300 is easily connected to the case unit 500 or easily separated from the case unit 500.

The detaching part 330 may include a detaching member 332 elastically supported in the head unit main body 310 in order to connect the filtering unit 400 to the case unit 500 or separate the filtering unit 400 from the case unit 500.

To this end, as shown in the embodiment illustrated in FIG. 3, the detaching part 330 may include an elastic member 331 and the foregoing detaching member 332.

As shown in the embodiment illustrated in FIG. 3, the elastic member 331 may be inserted into the head unit main body 310, specifically, into an insertion projection 310c provided in the main body member 310b of the head unit main body 310.

As shown in the embodiment illustrated in FIG. 3, the detaching member 332 may be elastically supported by the foregoing elastic member 331. Also, the detaching member 332 may configured to allow the filtering unit 400 in which the water purifying filter 200 is connected to the head unit 300 to be caught in the case unit 500 when the filtering unit 400 is connected to the case unit 500 as illustrated in FIG. 5, and allow the filtering unit 400 to be released from the case unit 500 when the filtering unit 400 is separated from the case unit 500 as illustrated in FIG. 7. Accordingly, as mentioned above, the filtering unit 400 may be easily connected to the case unit 500 or easily separated from the case unit 500.

To this end, as illustrated in FIGS. 3 and 6 through 8, a handle portion 332a may be formed on one side of the detaching member 332, and a stopping projection 332b may be formed on the other side of the detaching member 332.

As shown in the embodiment illustrated in FIGS. 3 and 6 through 8, the handle portion 332a may be inserted into the head unit main body 310, specifically into a handle hole 310d formed in the main body member 310b of the head unit main body 310, so as to be protruded. Thus, the user may easily press the handle portion 332a. Also, to this end, the handle portion 332a may have a plurality of abrasive projections or a plurality of abrasive recesses formed thereon as illustrated.

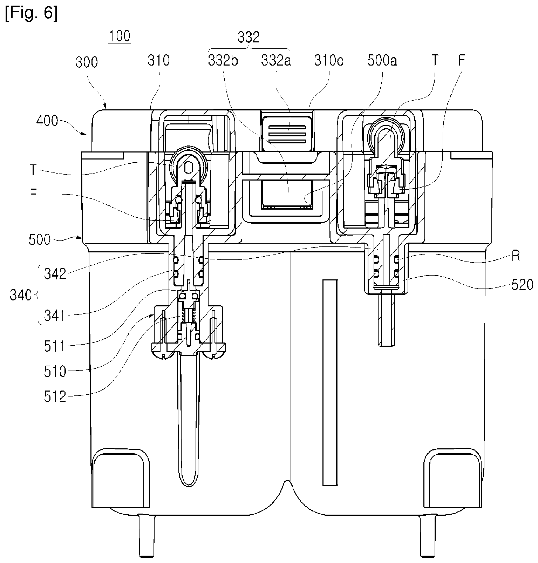

As shown in the embodiment illustrated in FIGS. 3 and 6 through 8, the stopping projection 332b may be inserted into an insertion hole 310e formed on the head unit main body 310, specifically on the main body member 310b of the head unit main body 310 in the illustrated embodiment, so as to be protruded. Also, the stopping projection 332b may be caught in a stopping hole 500a formed in the case unit 500 when the filtering unit 400 in which the water purifying filter 200 is connected to the head unit 300 is connected to the case unit 500, as illustrated in FIG. 6.

Namely, when the user applies external force by pressing the handle portion 332a of the detaching member 332, the detaching member 332, overcoming elastic force of the elastic member 331, may move inwardly of the head unit main body 310, specifically, the main body member 310b of the head unit main body 310.

In this state, as illustrated in FIG. 5, the filtering unit 400 in which the water purifying filter 200 is connected to the head unit 300 is insertedly installed in the case unit 500. When external force applied to the handle portion 332a of the detaching member 332 is removed, the detaching member 332 is moved to an outer side of the head unit main body 310, specifically, the main body member 310b of the head unit main body 310 in the illustrated embodiment, so as to be returned to its original position.

Accordingly, as illustrated in FIGS. 5 and 6, when the filtering unit 400 in which the water purifying filter 200 is connected to the head unit 300 is insertedly installed in the case unit 500, the stopping projection 332b of the detaching member 332 may be caught in the stopping hole 500a formed in the case unit 500 as illustrated in FIG. 6. Thus, the filtering unit 400 in which the water purifying filter 200 is connected to the head unit 300 is insertedly installed in the case unit 500 such that it is not separated from the case unit 500 as illustrated.

Also, in the state illustrated in FIG. 6, when the user applies external force to the handle portion 332a of the detaching member 332 by pressing the handle portion 332a, as mentioned above, the detaching member 332, overcoming elastic force of the elastic member 331, is moved inwardly of the head unit main body 310, specifically, inwardly of the main body member 310b of the head unit main body 310 in the illustrated embodiment. Accordingly, the stopping projection 332b of the detaching member 332 is released from the stopping hole 500a of the case unit 500. Accordingly, as illustrated in FIG. 7, the filtering unit 400 insertedly positioned in the case unit 500 can be easily separated from the case unit 500.

Also, as described above, after the filtering unit 400 is separated from the case unit 500 and external force applied to the handle portion 332a of the detaching member 332 is removed, the detaching member 332 is returned to its original position by elastic force of the elastic member 331.

Accordingly, the filtering unit 400 in which the water purifying filter 200 is connected to the head unit 300 may be connected to and separated from the case unit 500 such that it is easily installed therein.

Meanwhile, as mentioned above, after the filtering unit 400 in which the water purifying filter 200 is connected to the head unit 300 is separated from the case unit 500, the water purifying filter 200 may be rotated to be separated from the head unit 300 as illustrated in FIG. 8.

Also, after a new water purifying filter 200 is connected to the head unit 300 through rotation, the filtering unit 400 in which the water purifying filter 200 is connected to the head unit 300 may be connected to the case unit 500 such that it is installed in the case unit 500.

Thus, rather than providing the head unit 300 to which the water purifying filter 200 is directly connected as in the related art to a water purifier, or the like, the case unit 500 to which the filtering unit 400 in which the water purifying filter 200 is connected to the head unit 300 is connected may be provided to a water purifier, or the like.

Also, after the filtering unit 400 in which the water purifying filter 200 is connected to the head unit 300 is separated from the case unit 500, the water purifying filter 200 may be replaced, and the filtering unit 400 in which the water purifying filter 200 is connected to the head unit 300 may be connected to the case unit 500.

Also, when the filtering unit 400 is separated from the case unit 500, it may be lifted upwardly of the case unit 500. Thus, because the water purifying filter 200 is not connected to the head unit 300 or separated from the head unit 300 with the head unit 300 connected to a water purifier (not shown) as in the related art, the water purifying filter 200 may be replaced even in a narrow space.

Also, the head unit 300 further includes an inlet/outlet part 340. As shown in the embodiment illustrated in FIG. 3, the inlet/outlet part 340 may be provided in the head unit main body 310, specifically, in the main body member 310b of the head unit main body 310 in the illustrated embodiment. As illustrated in FIG. 6, the inlet/outlet part 340 is configured to allow raw water introduced to the case unit 500 to flow into the filter connection part 320 and purified water flowing out of the filter connection part 320 to flow out therefrom through the case unit 500, when the filtering unit 400 in which the water purifying filter 200 is connected to the head unit 300 is connected to the case unit 500. To this end, as shown in the embodiment illustrated in FIGS. 3 and 6, the inlet/outlet part 340 includes a raw water inlet 341 and a purified water outlet 342.

As shown in the embodiment illustrated in FIG. 3, one side of the raw water inlet 341 may be disposed on the head unit main body 310, specifically, on the main body member 310b in the illustrated embodiment, so as to be connected to the inlet connection portion 321 of the foregoing filter connection part 320 as illustrated in FIG. 6. One side of the raw water inlet 341 may be connected to the other side of the connection pipe T having one side connected to the inlet connection portion 321 of the filter connection part 320 so as to be connected to the inlet connection portion 321 of the filter connection part 320 as in the illustrated embodiment. One side and the other side of the connection pipe T may be connected to one side of the inlet connection portion 321 of the filter connection part 320 and one side of the raw water inlet 341 by the fitting member F.

Also, as illustrated in FIG. 6, when the filtering unit 400 in which the water purifying filter 200 is connected to the head unit 300 is connected to the case unit 500, the other side of the raw inlet 341 is inserted to be connected to an inlet insertion part 510 (to be described) provided in the case unit 500 and connected to a raw water source (not shown) such as tap water, or the like.

Accordingly, when raw water from the raw water source is introduced to the inlet insertion part 510, the raw water introduced to the inlet insertion portion 510 may be introduced to the raw water inlet 341. The raw water introduced to the raw water inlet 341 may flow to the inlet connection portion 321 of the foregoing filter connection part 320. Also, the raw water flowing to the inlet connection portion 321 of the filter connection part 320 may be introduced to the water purifying filter 200 through the inlet 210 of the water purifying filter 200 connected to the inlet connection portion 321 of the filter connection part 320.

As shown in the embodiment illustrated in FIGS. 3 and 6, one side of the purified water outlet 342 may be provided in the head unit main body 310, specifically, in the main body member 310b of the head unit main body 310, so as to be connected to the outlet connection portion 322 of the foregoing filter connection part 320. As shown in the illustrated embodiment, one side of the purified water outlet 342 may be connected to the other side of the connection pipe T having one side connected to the outlet connection portion 322 of the filter connection part 320, so as to be connected to the outlet connection portion 322 of the filter connection part 320. As shown in the illustrated embodiment, one side and the other side of the connection pipe T may be connected to one side of the outlet connection portion 322 of the filter connection part 320 and one side of the purified water outlet 342 by the fitting member F.

Also, as illustrated in FIG. 6, when the filtering unit 400 in which the water purifying filter 200 is connected to the head unit 300 is connected to the case unit 500, the other side of the purified water outlet 342 may be inserted in and connected to the outlet insertion part 520 provided in the case unit 500. Accordingly, purified water flowing out of the outlet 220 of the water purifying filter 200 after being filtered by the water purifying filter 200 may be introduced to the purified water outlet 342 through the outlet connection portion 322 of the filter connection part 320. The water introduced to the purified water outlet 342 may be introduced to the outlet insertion part 520 so as to flow out therefrom to the outside.

Meanwhile, as shown in the embodiment illustrated in FIGS. 3 and 6, one or more sealing members R may be provided on the other side of the raw water inlet 341 and the purified water outlet 342. Accordingly, as mentioned above, when the filtering unit 400 in which the water purifying filter 200 is connected to the head unit 300 is connected to the case unit 500 and raw water is introduced to the raw water inlet 341 through the inlet insertion part 510 of the case unit 500, the raw water may not be leaked to the outside. Also, as mentioned above, when purified water flowing out of the purified water outlet 342 flows to the outlet insertion part 520 of the case unit 500, it may not be leaked to the outside.

The filtering unit 400 in which the water purifying filter 200 is connected to the head unit 300 may be connected to the case unit 500 such that it is installed therein or separated therefrom. Also, the case unit 500 may be configured to allow raw water to be introduced to the head unit 300 and purified water flowing out of the head unit 300 to flow out therefrom, when the filtering unit 400 is connected. To this end, as shown in the embodiment illustrated in FIGS. 4 and 6, the case unit 500 includes the inlet insertion part 510 and the outlet insertion part 520.

The inlet insertion part 510 is connected to, for example, a raw water source (not shown) such as tap water, or the like. Also, as illustrated in FIG. 6, when the filtering unit 400 is connected to the case unit 500, the foregoing raw water inlet 341 included in the head unit 300 is inserted to be connected. Accordingly, as described above and as illustrated in FIG. 6, raw water from the raw water source is introduced to the head unit 300, i.e., the inlet connection portion 321 of the filter connection part 320 of the head unit, through the inlet insertion part 510 and the raw water inlet 341, so as to be introduced to the inlet 210 of the water purifying filter 200.

Meanwhile, as shown in the embodiment illustrated in FIG. 6, the inlet insertion part 510 includes an opening and closing member 511. When the raw water inlet 341 is inserted, a flow channel formed in the inlet insertion part 510 may be opened by the opening and closing member 511, and when the raw water inlet 341 is separated, the flow channel may be closed by the opening and closing member 511. Also, the opening and closing member 511 may be elastically supported by the elastic member 512 provided in the inlet insertion part 510.

Through such a configuration, as illustrated in FIG. 6, when the filtering unit 400 is connected to the case unit 500 so the raw water inlet 341 is insertedly connected to the inlet insertion portion 510, the opening and closing member 511 may overcome elastic force of the elastic member 512 by the raw water inlet 341 so as to be moved. Accordingly, as illustrated in FIG. 6, the flow channel formed in the inlet insertion part 510 may be opened. Raw water introduced into the inlet insertion part 510 may then flow to the raw water inlet 341.

Also, as illustrated in FIG. 7, when the filtering unit 400 is separated from the case unit 500 so the raw water inlet 341 is separated from the inlet insertion part 510, as illustrated, the opening and closing member 511 may be moved by elastic force of the elastic member 512 in a direction opposite to that described above. Accordingly, as illustrated, the flow channel formed in the inlet insertion part 510 may be closed. Thus, raw water introduced to the inlet insertion part 510 may not flow.

Through such a configuration, when the filtering unit 400 is connected to the case unit 500, as illustrated in FIG. 6, raw water from the raw water source may be introduced to the head unit 300 of the filtering unit 400. When the filtering unit 400 is separated from the case unit 500, as illustrated in FIG. 7, raw water may not be introduced to the head unit 300 of the filtering unit 400.

Thus, without an opening and closing valve, raw water may be supplied to the head unit 300 or supply of raw water to the head unit 300 may be stopped by simply connecting the filtering unit 400 to the case 500 or separating the filtering unit 400 from the case unit 500.

As illustrated in FIG. 6, when the filtering unit 400 is connected to the case unit 500, the foregoing purified water outlet 342 included in the head unit 300 is inserted into the outlet insertion part 520. Accordingly, as described above and as illustrated in FIG. 6, purified water flowing out of the outlet 220 of the water purifying filter 200 is introduced to the outlet connection portion 322 of the filter connection part 320 of the head unit 300, flows in the purified water outlet 342, and is introduced to the outlet insertion part 520, so as to flow out therefrom to the outside.

As described above and as shown in the embodiment illustrated in FIGS. 4 and 6, the stopping hole 500a may be formed in an upper portion of the case unit 500. As described above and as illustrated, when the filtering unit 400 in which the water purifying filter 200 is connected to the head unit 300 is connected to the case unit 500, the stopping projection 332b formed on the detaching member 332 included in the head unit 300 may be caught in the stopping hole 500a.

Accordingly, when the filtering unit 400 is connected to the case unit 500, the filtering unit 400 is prevented from being separated from the case unit 500. Also, as mentioned above, the raw water inlet 341 and the purified water outlet 342 insertedly connected to the inlet insertion part 510 and the outlet insertion part 520 of the case unit 500, respectively, as the filtering unit 400 is connected to the case unit 500 may not be separated. Thus, as mentioned above, the raw inlet 341 may force the opening and closing member 511 provided in the inlet insertion part 510 to be in a position to open the flow channel formed in the inlet insertion part 510. Accordingly, raw water can be smoothly supplied to the water purifying filter 200. Also, purified water flowing out of the water purifying filter 200 may also smoothly flow out therefrom to the outside.

As shown in the embodiment illustrated in FIGS. 4 and 5, the case unit 500 may have a shape corresponding to the filtering unit 400 to allow the filtering unit 400 to be installed therein. To this end, as shown in the illustrated embodiment, the filter insertion part 500b may be formed in the case unit 500 to allow the water purifying filter 200 is inserted thereinto when the filtering unit 400 is connected to the case unit 500. In the illustrated embodiment, two filter insertion parts 500b are formed in the case unit 500 so that two water purifying filters 200 can be included in the filtering unit 400. However, the number of the filter insertion parts 500b is not particularly limited and any number of filter insertion parts 500b may be provided as long as it corresponds to the water purifying filters 200 included in the filtering unit 400.

Through such a configuration, as illustrated in FIG. 7, when the filtering unit 400 is separated from the case unit 500, although water is leaked from the filtering unit 400, it is leaked to the case unit 500. Thus, water is prevented from being leaked to a water purifier (not shown), or the like in which the case unit 500 is provided. Accordingly, electronic equipment provided in the water purifier, or the like, may not be broken down and the water purifier, or the like, may not be contaminated.

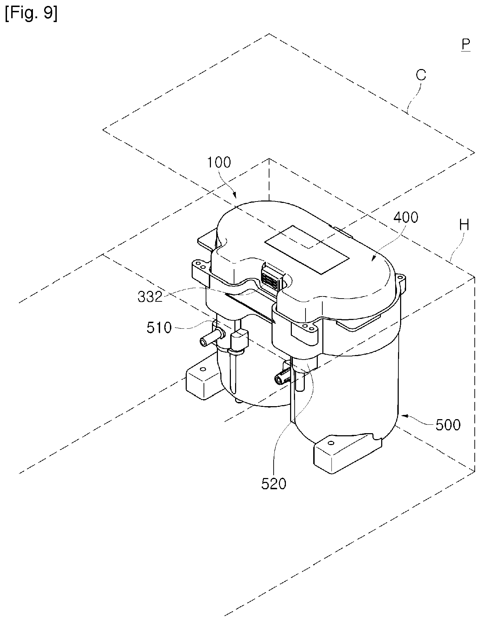

As shown in the embodiment illustrated in FIG. 9, a water purifier P according to an embodiment of the present invention includes a water purifier housing H and the foregoing water purifying filter assembly module 100.

As shown in the embodiment illustrated in FIG. 9, the foregoing water purifying filter assembly module 100 is installed in the water purifier housing H. The head unit 300 included in the water purifying filter assembly module 100 is exposed from an upper surface of the water purifier housing H. Accordingly, the head unit 300 of the water purifying filter assembly module 100 may serve as a cover of the water purifier housing H. Also, as shown in the embodiment illustrated in FIG. 9, the head unit 300 of the water purifying filter assembly module 100 is exposed to the outside when a top cover C of the water purifier housing H is separated.

As described above, in case of using the water purifying filter assembly module 100 and the water purifier P having the same according to an embodiment of the present invention, when the filtering unit in which one or more water purifying filters are connected to the head unit is connected to the case unit such that it is installed in the case unit, raw water can flow into the filtering unit without a pipe connection operation and purified water filtered by the water purifying filters can flow out therefrom, the filtering unit in which water purifying filters are connected to a head unit can be connected to a case unit such that it is easily installed therein, or separated therefrom, and the water purifying filter can be replaced even in a narrow space. Also, when the filtering unit in which the water purifying filters are connected to the head unit is separated from the case unit, raw water is prevented from flowing into the water purifying filters. Also, when the filtering unit in which the water purifying filters are connected to the head unit is separated from the case unit, although water is leaked, it is leaked to the case unit, thus preventing contamination or an incident due to the dripping water.

Also, two or more different types of water purifying filters can be connected in series, two or more water purifying filters may not be replaced together, water filtering efficiency by the water purifying filters can be enhanced, and two or more water purifying filters can be connected to appropriate filter connection parts, respectively, among two or more filter connection parts included in the head unit to allow the water purifying filters to be connected thereto.

## Claims

1. A water purifying filter assembly module (100) comprising:
a head unit (300), to or from which one or more water purifying filters (200) are connected or separated, allowing raw water to flow into the water purifying filters (200) and purified water filtered by the water purifying filters (200) to flow out therefrom, when the water purifying filters (200) are connected to the head unit (300); and
a case unit (500), to or from which a filtering unit (400) in which the water purifying filters (200) are connected to the head unit (300) is connected or separated so as to be installed therein, allowing raw water to flow into the head unit (300) and purified water from the head unit (300) to flow out therefrom, when the filtering unit (400) is connected to the case unit (500),
wherein the head unit (300) comprises a head unit main body (310); a filter connection part (320) disposed in the head unit main body (310) to allow raw water to flow into the water purifying filters (200) and purified water filtered by the water purifying filters (200) to flow out therefrom, when the water purifying filters (200) are connected; and a detaching part (330) disposed in the head unit main body (310) to facilitate a connection to or separation from the case unit (500),
the head unit (300) includes two or more filter connection parts (320) to allow two or more water purifying filters (200) to be connected to or separated therefrom, at least one of the two or more water purifying filters (200) include an identification projection (250), a filter connection part (320), to which the water purifying filter (200) having the identification projection (250) formed thereon is prevented from being connected, has a different identification projection (350) formed thereon, so that the water purifying filter (200) having the identification projection (250) is not connected to the filter connection part (320) having the different identification projection (350) formed thereon,
the head unit (300) further comprises an inlet/outlet part (340) disposed in the head unit main body (310) and allowing raw water introduced to the case unit (500) to flow into the filter connection part (320) and purified water flowing out from the filter connection unit (320) to flow out therefrom through the case unit (500), when connected to the case unit (500),
the inlet/outlet part (340) comprises a raw water inlet (341) having one side disposed in the head unit main body (310) so as to be connected to an inlet connection portion (321) included in the filter connection part (320) and the other side inserted into an inlet insertion part (510) disposed in the case unit (500), when connected to the case unit (500), and a purified water outlet (342) having one side disposed in the head unit main body (310) so as to be connected to an outlet connection portion (322) included in the filter connection part (320) and the other side inserted into an outlet insertion part (520) provided in the case unit (500), when connected to the case unit (500),
the case unit (500) comprises the inlet insertion part (510) connected to a raw water source, the raw water inlet (341) included in the head unit (300) being inserted thereinto when the filtering unit (400) is connected, and the outlet insertion part (520), into which the purified water outlet (342) included in the head unit (300) is inserted, when the filtering unit (400) is connected, and
the inlet insertion part (510) includes an opening and closing member (511) opening a flow channel formed in the inlet insertion part (510) when the raw water inlet (341) is inserted therein and closing the flow channel when the raw water inlet (341) is separated in order that when the filtering unit (400) is installed in and connected to the case unit (500), raw water is introduced to the filtering unit (400) without a pipe connection operation and purified water filtered by the filtering unit (400) flows therefrom, and when the filtering unit (400) is separated from the case unit (500), raw water is prevented from flowing into the water purifying filter (200).

2. The water purifying filter assembly module of claim 1, wherein the detaching part (330) includes a detaching member (332) elastically supported by the head unit main body (310) in order to connect the filtering unit (400) to the case unit (500) or separate the filtering unit (400) therefrom.

3. The water purifying filter assembly module of claim 2, wherein the detaching part (330) comprises:
an elastic member (331) inserted into an insertion projection (310c) formed on the head unit main body (310) ; and
the detaching member (332) elastically supported by the elastic member (331) and configured to be caught by the case unit (500) when connected to the case unit (500) and released from the case unit (500) when separated from the case unit (500).

4. The water purifying filter assembly module of claim 3, wherein a handle portion (332a) is formed on one side of the detaching member (332) such that the handle portion (332a) is inserted into and protruded from a handle hole (310d) formed in the head unit main body (310), and
a stopping projection (332b) is formed on the other side of the detaching member (332) such that the stopping projection (332b) is inserted into and protruded from an insertion hole (310e) formed in the head unit main body (310) and caught by a stopping hole (500a) formed in the case unit (500) when connected to the case unit (500).

5. The water purifying filter assembly module of claim 1, wherein the opening and closing member (511) is elastically supported by an elastic member (512) provided in the inlet insertion part (510).

6. The water purifying filter assembly module of claim 1, wherein the stopping hole (500a) is formed in an upper portion of the case unit (500) to allow a stopping projection (332b) formed in the detaching member (332) included in the head unit (300) to be caught therein when the filtering unit (400) is connected.

7. The water purifying filter assembly module of claim 1, wherein the water purifying filter (200) includes a connection protuberance (240) which is caught by a connection protuberance formed on the filter connection part (320) included in the head unit (300) or released therefrom according to a rotation, so that the water purifying filter (200) is connected to or separated from the filter connection part (320) according to rotation.

8. The water purifying filter assembly module of claim 7, wherein the water purifying filter (200) includes a rotation preventing projection (260) and a filter insertion part (500b) formed in the case unit (500) includes a rotation preventing recess (530) allowing the rotation preventing projection (260) to be inserted therein, so that when the water purifying filter (200) is inserted, the rotation preventing projection (260) prevents the water purifying filter (200) from being rotated.

9. A water purifier comprising:
a water purifier housing (H): and
the foregoing water purifying filter assembly module (100) installed in the water purifier housing (H) according to any one of claim 1 to 8,
wherein the head unit (300) included in the water purifying filter assembly module (100) is exposed from an upper surface of the water purifier housing (H) or is exposed to the outside when a top cover (C) of the water purifier housing (H) is separated.

## Patentansprüche

1. Wasserreinigungsfilter-Baugruppenmodul (100) umfassend:
eine Kopfeinheit (300), mit der ein oder mehrere Wasserreinigungsfilter (200) verbunden oder von dem diese getrennt werden und die das Strömen von Rohwasser in die Wasserreinigungsfilter (200) und das Herausströmen von durch die Wasserreinigungsfiltern (200) gereinigtem Wasser ermöglicht, wenn die Wasserreinigungsfilter (200) mit der Kopfeinheit (300) verbunden sind; und
eine Gehäuseeinheit (500), mit der eine Filtereinheit (400), in der die Wasserreinigungsfilter (200) mit der Kopfeinheit (300) verbunden sind, verbunden wird, um darin installiert zu werden, oder von dieser getrennt wird, und die ein Strömen von Rohwasser in die Kopfeinheit (300) und ein Herausströmen von gereinigtem Wasser von der Kopfeinheit (300) ermöglicht, wenn die Filtereinheit (400) mit der Gehäuseeinheit (500) verbunden ist,
wobei die Kopfeinheit (300) einen Kopfeinheit-Hauptkörper (310) umfasst; einen im Kopfeinheit-Hauptkörper (310) angeordneten Filterverbindungsteil (320), um das Strömen von Rohwasser in die Wasserreinigungsfilter (200) und das Herausströmen von durch die Wasserreinigungsfiltern (200) gereinigtem Wasser ermöglichen, wenn die Wasserreinigungsfilter (200) verbunden sind; und einen im Kopfeinheit-Hauptkörper (310) angeordneten Abnahmeteil (330), um ein Verbinden mit und ein Trennen von der Gehäuseeinheit (500) zu ermöglichen,
wobei die Kopfeinheit (300) zwei oder mehr Filterverbindungsteile (320) umfasst, um ein Verbinden von zwei oder mehr Wasserreinigungsfiltern (200) mit dieser oder ein Trennen von dieser zu ermöglichen, wenigstens eines der zwei oder mehr Wasserreinigungsfilter (200) einen Identifikationsvorsprung (250) umfasst und ein Filterverbindungsteil (320), bei dem ein Verbinden des Wasserreinigungsfilters (200) mit dem darauf gebildeten Identifikationsvorsprung (250) verhindert wird, einen andere darauf gebildete Identifikationsvorsprung (350) aufweist, so dass das den Identifikationsvorsprung (250) aufweisende Wasserreinigungsfilter (200) nicht mit dem den darauf gebildeten anderen Identifikationsvorsprung (350) aufweisenden Filterverbindungsteil (320) verbunden ist,
wobei die Kopfeinheit (300) ferner einen im Kopfeinheit-Hauptkörper (310) angeordneten und das Strömen von der Gehäuseeinheit (500) zugeführtem Rohrwasser in den Filterverbindungsteil (320) und das Herausströmen von aus der Filterverbindungseinheit (320) herausströmendem gereinigten Wasser daraus durch die Gehäuseeinheit (500), wenn mit der Gehäuseeinheit (500) verbunden, ermöglichenden Einlauf-/Auslaufteil (340) umfasst,
wobei der Einlauf-/Auslaufteil (340) einen Rohwassereinlauf (341), dessen eine Seite im Kopfeinheit-Hauptkörper (310) angeordnet ist, um mit einem im Filterverbindungsteil (320) enthaltenen Einlaufverbindungsabschnitt (321) verbunden zu werden, und dessen andere Seite in einen in der Gehäuseeinheit (500) angeordneten Einlaufeinführteil (510) eingeführt ist, wenn mit der Gehäuseeinheit (500) verbunden, und einen Auslauf (342) für gereinigtes Wasser, dessen eine Seite im Kopfeinheit-Hauptkörper (310) angeordnet ist, um mit einem im Filterverbindungsteil (320) enthaltenen Auslaufverbindungsabschnitt (322) verbunden zu werden, und dessen andere Seite in einen in der Gehäuseeinheit (500) angeordneten Auslaufeinführabschnitt (520) eingeführt ist, wenn mit der Gehäuseeinheit (500) verbunden, umfasst,
wobei die Gehäuseeinheit (500) den mit einer Rohwasserquelle verbundenen Einlaufeinführteil (510), wobei der in der Kopfeinheit (300) enthaltene Rohwassereinlauf (341) darin eingeführt ist, wenn die Filtereinheit (400) verbunden ist, und den Auslaufeinführteil (520), in den der in der Kopfeinheit (300) enthaltene Auslauf (342) für gereinigtes Wasser eingeführt ist, wenn die Filtereinheit (400) verbunden ist, umfasst, und
wobei der Einlaufeinführabschnitt (510) ein Öffnungs- und Schließelement (511) zum Öffnen eines im Einlaufeinführteil (510) gebildeten Strömungskanals, wenn der Rohwassereinlauf (341) darin eingeführt ist, und Schließen des Strömungskanals, wenn der Rohwassereinlauf (341) getrennt ist, so dass, wenn die Filtereinheit (400) in der Gehäuseeinheit (500) installiert ist und mit dieser verbunden ist, Rohwasser der Filtereinheit (400) ohne einen Rohrverbindungsbetrieb zugeführt wird und durch die Filtereinheit (400) gefiltertes gereinigtes Wasser aus dieser herausströmt, und, wenn die Filtereinheit (400) von der Gehäuseeinheit (500) getrennt ist, verhindert wird, dass Rohwasser in das Wasserreinigungsfilter (200) strömt.

2. Wasserreinigungsfilter-Baugruppenmodul nach Anspruch 1, wobei der Abnahmeteil (330) ein elastisch vom Kopfeinheit-Hauptkörper (310) gestütztes Abnahmeelement (332) umfasst, um die Filtereinheit (400) mit der Gehäuseeinheit (500) zu verbinden oder die Filtereinheit (400) von dieser zu trennen.

3. Wasserreinigungs-Baugruppenmodul nach Anspruch 2, wobei der Abnahmeteil (330) umfasst:
ein in einen auf dem Kopfeinheit-Hauptkörper (310) gebildeten Einführvorsprung (310c) eingeführtes elastisches Element (331); und
das vom elastischen Element (331) gestützte und zur Aufnahme von der Gehäuseeinheit (500), wenn mit der Gehäuseeinheit (500) verbunden, und Lösen von der Gehäuseeinheit (500), wenn von der Gehäuseeinheit (500) getrennt, ausgebildete Abnahmeelement (332).

4. Wasserreinigungsfilter-Baugruppenmodul nach Anspruch 3, wobei ein Griffabschnitt (332a) auf einer Seite des Abnahmeelements (332) gebildet ist, so dass der Griffabschnitt (332a) in ein im Kopfeinheit-Hauptkörper (310) gebildetes Griffloch (310d) eingeführt ist und von diesem hervorsteht, und
ein Stoppvorsprung (332b) auf der anderen Seite des Abnahmeelements (332) gebildet ist, so dass der Stoppvorsprung (332b) in ein im Kopfeinheit-Hauptkörper (310) gebildeten Einführloch (310e) eingeführt ist und von diesem hervorsteht und von einem in der Gehäuseeinheit (500) gebildeten Stopploch (500a) aufgenommen ist, wenn mit der Gehäuseeinheit (500) verbunden.

5. Wasserreinigungsfilter-Baugruppenmodul nach Anspruch 1, wobei das Öffnungsund Schließelement (511) von einem im Einlaufeinführteil (510) angeordneten elastischen Element (512) elastisch gestützt wird.

6. Wasserreinigungsfilter-Baugruppenmodul nach Anspruch 1, wobei das Stopploch (500a) in einem oberen Abschnitt der Gehäuseeinheit (500) gebildet ist, um ein Aufnehmen von einem im in der Kopfeinheit (300) enthaltenen Abnahmeelement (332) gebildeten Stoppvorsprung (332b) darin zu ermöglichen, wenn die Filtereinheit (400) verbunden ist.

7. Wasserreinigungsfilter-Baugruppenmodul nach Anspruch 1, wobei das Wasserreinigungsfilter (200) einen Verbindungserhebung (240) umfasst, die von einer auf dem in der Kopfeinheit (300) enthaltenen Filterverbindungsteil (320) gebildeten Verbindungserhebung aufgenommen oder von dieser entsprechend einer Drehung gelöst wird, so dass das Wasserreinigungsfilter (200) mit dem Filterverbindungsteil (320) entsprechend der Drehung verbunden oder getrennt wird.

8. Wasserreinigungsfilter-Baugruppenmodul nach Anspruch 7, wobei das Wasserreinigungsfilter (200) einen Drehverhinderungsvorsprung (260) umfasst und ein in der Gehäuseeinheit (500) gebildeter Filtereinführteil (500b) eine Drehverhinderungsaussparung (530) umfasst, die ein Einführen des Drehverhinderungsvorsprungs (260) darin ermöglicht, so dass, wenn das Wasserreinigungsfilter (200) eingeführt ist, der Drehverhinderungsvorsprung (260) ein Drehen des Wasserreinigungsfilters (200) verhindert.

9. Wasserreiniger umfassend:
ein Wasserreinigergehäuse (H), und
das vorhergehende im Wasserreinigergehäuse (H) installierte Wasserreinigungsfilter-Baugruppenmodul (100) gemäß einem der Ansprüche 1 bis 8,
wobei die im Wasserreinigungsfilter-Baugruppenmodul (100) enthaltene Kopfeinheit (300) von einer Oberseite des Wasserreinigergehäuses (H) freigelegt ist oder nach außen freigelegt ist, wenn ein Deckel (C) des Wasserreinigergehäuses (H) abgenommen ist.

## Revendications

1. Module d'assemblage de filtre purificateur d'eau (100) comprenant :
- une unité de tête (300), à laquelle ou de laquelle un ou plusieurs filtres de purification d'eau (200) sont connectés ou séparés, permettant à l'eau brute de s'écouler dans les filtres de purification d'eau (200) et à l'eau purifiée filtrée par les filtres de purification d'eau (200) de s'en échapper, lorsque les filtres de purification d'eau (200) sont connectés à l'unité de tête (300) ; et
une unité de boîtier (500), à laquelle ou à partir de laquelle une unité de filtration (400) dans laquelle les filtres de purification d'eau (200) sont connectés à l'unité de tête (300) est connectée ou séparée de manière à être installée dans celle-ci, permettant à l'eau brute de s'écouler dans l'unité de tête (300) et à l'eau purifiée de l'unité de tête (300) de s'en échapper, lorsque l'unité de filtration (400) est connectée à l'unité de boîtier (500),
dans laquelle l'unité de tête (300) comprend :
un corps principal (310) de cette unité de tête ;
une pièce de raccordement de filtre (320) disposée dans le corps principal (310) de l'unité de tête pour permettre à l'eau brute de s'écouler dans les filtres de purification d'eau (200) et à l'eau purifiée filtrée par les filtres de purification d'eau (200) de s'en échapper, lorsque les filtres de purification d'eau (200) sont connectés ; et
une partie permettant la séparation (330) disposée dans le corps principal (310) de l'unité de tête pour faciliter une connexion ou une séparation de l'unité de boîtier (500),
l'unité de tête (300) comprend :
deux ou plusieurs parties de connexion de filtre (320) pour permettre à deux ou plusieurs filtres de purification d'eau (200) d'être connectés ou séparés de celle-ci, au moins l'un des deux ou plusieurs des filtres de purification d'eau (200) comprenant une saillie d'identification (250),
une partie de connexion de filtre (320), à laquelle le filtre de purification d'eau (200) comportant la saillie d'identification (250) formée sur celui-ci est empêché d'être connecté, présente une saillie d'identification différente (350) formée sur celui-ci, de sorte que le filtre de purification d'eau (200) ayant la saillie d'identification (250) n'est pas connecté à la partie de connexion de filtre (320) ayant la saillie d'identification différente (350) formée sur elle,
l'unité de tête (300) comprend en outre une partie d'entrée/sortie (340) disposée dans le corps principal (310) de l'unité de tête et permettant à l'eau brute introduite dans l'unité de boîtier (500) de s'écouler dans la partie de connexion de filtre (320) et à l'eau purifiée sortant de l'unité de connexion de filtre (320) de sortir par l'unité de boîtier (500), lorsqu'elle est connectée à l'unité de boîtier (500),
la partie d'entrée/sortie (340) comprend une entrée d'eau brute (341) ayant un côté disposé dans le corps principal (310) de l'unité de tête de façon à être connecté à une partie de connexion d'entrée (321) incluse dans la partie de connexion de filtre (320) et l'autre côté est inséré dans une partie d'insertion d'entrée (510) disposée dans l'unité de boîtier (500), lorsqu'il est connecté à l'unité de boîtier (500), et une sortie d'eau purifiée (342) ayant un côté disposé dans le corps principal (310) de l'unité d'alimentation de manière à être connecté à une partie de connexion de sortie (322) incluse dans la partie de connexion de filtre (320) et l'autre côté est inséré dans une partie d'insertion de sortie (520) prévue dans l'unité de boîtier (500), lorsque elle connectée à l'unité de boîtier (500),
l'unité de boîtier (500) comprend la partie d'insertion d'entrée (510) reliée à une source d'eau brute, l'entrée d'eau brute (341) incluse dans l'unité de tête (300) étant insérée dans celle-ci lorsque l'unité de filtration (400) est connectée, et la partie d'insertion de sortie (520), dans laquelle est insérée l'évacuation d'eau purifiée (342) est incluse dans l'unité de tête (300), lorsque l'unité de filtration (400) est connectée, et
la partie d'insertion d'entrée (510) comprend un élément d'ouverture et de fermeture (511) ouvrant un canal d'écoulement formé dans la partie d'insertion d'entrée (510) lorsque l'entrée d'eau brute (341) est insérée dans cette unité de filtration (500) et fermant le canal d'écoulement lorsque l'entrée d'eau brute (341) est séparée afin que lorsque l'unité de filtration (400) est installée dans et connectée à l'unité de boîtier (500), de l'eau brute est introduite dans l'unité de filtration (400) sans une opération de raccordement de conduite et de l'eau purifiée filtrée par l'unité de filtration (400) s'écoule de celle-ci, et lorsque l'unité de filtration (400) est séparée de l'unité de boîtier (500), l'eau brute ne peut s'écouler dans le filtre de purification d'eau (200).

2. Module d'assemblage de filtre de purification d'eau selon la revendication 1, dans lequel la partie permettant la séparation (330) comprend un élément permettant la séparation (332) supporté élastiquement par le corps principal (310) de l'unité de tête afin de connecter l'unité de filtration (400) à l'unité de boîtier (500) ou de séparer l'unité de filtration (400) de celle-ci.

3. Module d'assemblage de filtre de purification d'eau selon la revendication 2, dans lequel la partie permettant la séparation (330) comprend :
un élément élastique (331) inséré dans une saillie d'insertion (310c) formée sur le corps principal (310) de l'unité de tête ; et
l'élément permettant la séparation (332) supporté élastiquement par l'élément élastique (331) et configuré pour être saisi par l'unité de boîtier (500) quand il est connecté avec l'unité de boîtier (500) et libéré de l'unité de boîtier (500) quand il est séparé de l'unité de boîtier (500).

4. Module d'assemblage de filtre de purification d'eau selon la revendication 3, dans lequel
une partie de poignée (332a) est formée sur un côté de l'élément permettant la séparation (332) de telle sorte que la partie de poignée (332a) est insérée dans un orifice pour poignée (310d), en faisant saillie, formé dans le corps principal (310) de l'unité de tête, et
une saillie d'arrêt (332b) est formée sur l'autre côté de l'élément permettant la séparation (332) de telle sorte que la saillie d'arrêt (332b) est insérée dans un trou d'insertion (310e) formé dans le corps principal (310) de l'unité, en en faisant saillie, et qu'elle est saisie par un trou d'arrêt (500a) formé dans l'unité (500) du boîtier, lorsque celle-ci est connectée à l'unité de boîtier (500).

5. Module d'assemblage de filtre de purification d'eau selon la revendication 1, dans lequel l'élément d'ouverture et de fermeture (511) est supporté élastiquement par un élément élastique (512) prévu dans la partie d'insertion d'entrée (510).

6. Module d'assemblage de filtre de purification d'eau selon la revendication 1, dans lequel le trou d'arrêt (500a) est formé dans une partie supérieure de l'unité de boîtier (500) pour permettre la saisie d'une saillie d'arrêt (332b) formée dans l'élément permettant la séparation (332) inclus dans l'unité de tête (300) lorsque l'unité de filtration (400) est connectée.

7. Module d'assemblage de filtre de purification d'eau selon la revendication 1, dans lequel le filtre de purification d'eau (200) comprend une protubérance de connexion (240) qui est saisie par une protubérance de connexion formée sur la partie de connexion de filtre (320) incluse dans l'unité de tête (300) ou en est libérée de celle-ci selon une rotation, de sorte que le filtre de purification d'eau (200) est connecté à ou séparé de la partie de connexion de filtre (320) selon la rotation.

8. Module d'assemblage de filtre de purification d'eau selon la revendication 7, dans lequel le filtre de purification d'eau (200) comprend une saillie empêchant la rotation (260) et une partie d'insertion de filtre (500b) formée dans l'unité de boîtier (500) comprend un évidement empêchant la rotation (530) permettant à la saillie empêchant la rotation (260) d'y être insérée, de sorte que lorsque le filtre de purification d'eau (200) est inséré, la saillie empêchant la rotation (260) empêche le filtre de purification d'eau (200) de tourner.

9. Purificateur d'eau comprenant :
un boîtier de purification d'eau (H) : et
le module d'assemblage de filtre de purification d'eau précité (100) installé dans le boîtier de purification d'eau (H) selon l'une quelconque des revendications 1 à 8,
dans lequel l'unité de tête (300) incluse dans le module d'assemblage de filtre de purification d'eau (100) est exposée par rapport à une surface supérieure du boîtier de purification d'eau (H) ou est exposée vers l'extérieur quand un couvercle supérieur (C) du boîtier de purification d'eau (H) est séparé.
